# EUROPÄISCHE PATENTSCHRIFT

(11) **EP 0 574 731 B1**
(45) Veröffentlichungstag und Bekanntmachung des Hinweises auf die Patenterteilung: **02.10.1996**
(21) Anmeldenummer: 93108313.3
(22) Anmeldetag: 22.05.1993
(51) Int. Cl.: H02K 9/06

(54) **Handwerkzeugmaschine mit Motorbelüftung**
Hand-held machine tool with ventilated motor
Machine outil à main à moteur ventilé

(30) Priorität: 19.06.1992 DE 4220078
(43) Veröffentlichungstag der Anmeldung: 22.12.1993
(73) Patentinhaber: ROBERT BOSCH GMBH, 70442 Stuttgart (DE)
(72) Erfinder: Strötgen, Eckerhard, Dr.-Ing., W-7035 Waldenbuch (DE); Prahst, Eberhard, Dipl.-Ing., W-7307 Aichwald 3 (DE)

(56) Entgegenhaltungen:
- EP-A- 0 444 908
- AT-B- 279 723
- DE-A- 2 724 250
- DE-A- 3 514 207
- DE-A- 3 942 083
- DE-B- 1 190 093
- FR-A- 1 167 706

## Beschreibung

### Stand der Technik

Die Erfindung geht aus von einer Handwerkzeugmaschine der im Oberbegriff des Anspruchs 1 definierten Gattung.

Bei solchen Elektrohandwerkzeugmaschinen besteht das Bedürfnis, durch Steigerung der Druckerhöhung und des Volumenstroms des zur Wärmeabfuhr am Elektromotor eingesetzten Radiallüfters den Elektromotor und andere wärmebelastete Bauteile im Maschinengehäuse besser zu kühlen und dadurch eine Leistungssteigerung vornehmen zu können.

Bei einer bekannten handgeführten Elektrowerkzeugmaschine der eingangs genannten Art (DE 39 42 083 A1) hat man zu diesem Zweck dem Radiallüfter einen kleineren Axialventilator vorgeschaltet, der mit dem Radiallüfter synchron umläuft. Dessen Ventilatorrad ist dabei zwischen dem Radiallüfter und dem Elektromotor auf der Motorwelle drehfest angeordnet, sitzt in Lüftungsrichtung also unmittelbar vor dem Radiallüfter in dessen Ansaugbereich.

DE-A-3 514 207 beschreibt eine Lichtmaschine bei welcher einem Radiallüfter in seinem Ansaugbereich ein räumlich feststehendes Gitter in Luftströmungsrichtung unmittelbar vorgeordnet ist. Im Gitter sind Luftleitschaufeln vorgesehen, die eine Ablenkung des Lufstromes in axialer Richtung bewirken.

### Vorteile der Erfindung

Die erfindungsgemäße Handwerkzeugmaschine mit den kennzeichnenden Merkmalen des Anspruchs 1 hat den Vorteil, daß eine Steigerung der Druckerhöhung und des Volumenstroms des Radiallüfters bis um 25% mit konstruktiv einfachen und hinsichtlich Montage- und Justierbarkeit wenig anspruchsvollen Mitteln erreicht werden kann.

Das Vordrallgitter kann einfach als Spritzgußteil aus Kunststoff hergestellt und zusammen mit dem für die Luftführung im Radiallüfter erforderlichen Abdeckring in einem einzigen Arbeitsgang gefertigt werden. Die Montage erfordert über die ohnehin notwendige Befestigung des Abdeckrings im Maschinengehäuse hinaus keinen zusätzlichen Zeitaufwand, da mit der Montage des Abdeckrings zugleich das Vordrallgitter lagerichtig positioniert und gehalten ist. Jegliche Bearbeitung der Motorwelle, wie diese zur Befestigung des bekannten Axialventilators erforderlich ist, entfällt.

Durch die in den weiteren Ansprüchen aufgeführten Maßnahmen sind vorteilhafte Weiterbildungen und Verbesserungen der im Anspruch 1 angegebenen Handwerkzeugmaschine möglich.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt einer Handwerkzeugmaschine,
- Fig. 2: eine perspektivische Darstellung von Radiallüfter und Vordrallgitter der Handwerkzeugmaschine in Fig. 1.

### Beschreibung des Ausführungsbeispiels

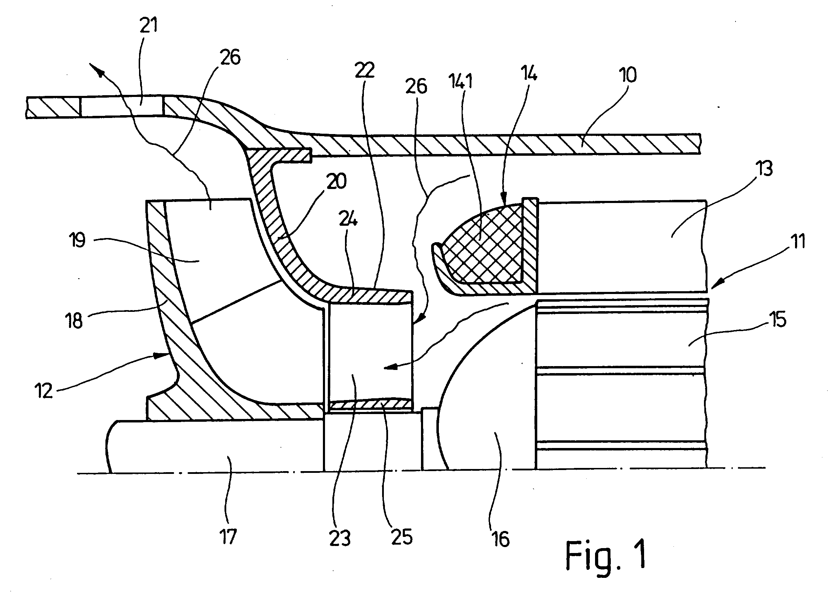

Die in Fig. 1 ausschnittweise im Längsschnitt dargestellte Handwerkzeugmaschine kann eine elektrische Bohrmaschine, ein elektrischer Winkelschleifer, eine Elektrohandsäge od.dgl. sein. Sie weist einen in einem Maschinengehäuse 10 untergebrachten Elektromotor 11 mit Radiallüfter 12 auf. Der als Kommutatormotor ausgebildete Elektromotor 11 weist in bekannter Weise einen gehäusefesten Stator 13 mit Statorwicklung 14 und einen darin umlaufenden Rotor 15 mit Rotorwicklung 16 auf. Der Rotor 15 sitzt zusammen mit dem Radiallüfter 12 drehfest auf einer Motorwelle 17, die im Maschinengehäuse 10 drehbar gelagert ist und die Antriebswelle für das Werkzeug darstellt. Der Radiallüfter 12 liegt dabei auf der vom Kommutator abgekehrten Seite des Elektromotors 11.

Der Radiallüfter 12 mit axialem Luftansaugbereich und radialem Luftaustrittsbereich besteht in bekannter Weise aus einer mit der Motorwelle 17 drehfest verbundenen Tragscheibe 18, von welcher aus sich Lüfterschaufeln 19 in Axialrichtung erstrecken, die jeweils in einer durch die Achse der Motorwelle 17 hindurchgehenden Radialebene liegen und relativ zu dieser zweidimensional gekrümmt sind. Die Lüfterschaufeln 19 sind auf ihrer dem Ansaugbereich zugekehrten Stirnseite von einem feststehenden Abdeckring 20 abgedeckt, der fest mit dem Maschinengehäuse 10 verbunden ist. Durch die Tragscheibe 18 und den Abdeckring 20 werden zwischen den einzelnen Lüfterschaufeln 19 Luftströmungskanäle gebildet, wodurch eine Druckerhöhung der aus dem Radiallüfter 12 ausströmenden Luft möglich ist. Nahe dem luftaustrittsseitigen Ende des Radiallüfters 12 sind in dem Maschinengehäuse 10 Luftaustrittsschlitze 21 angeordnet, die sich in Axialrichtung im Maschinengehäuse 10 erstrecken. Die Flächennormalen der Luftaustrittsschlitze 21 sind im wesentlichen radial ausgerichtet.

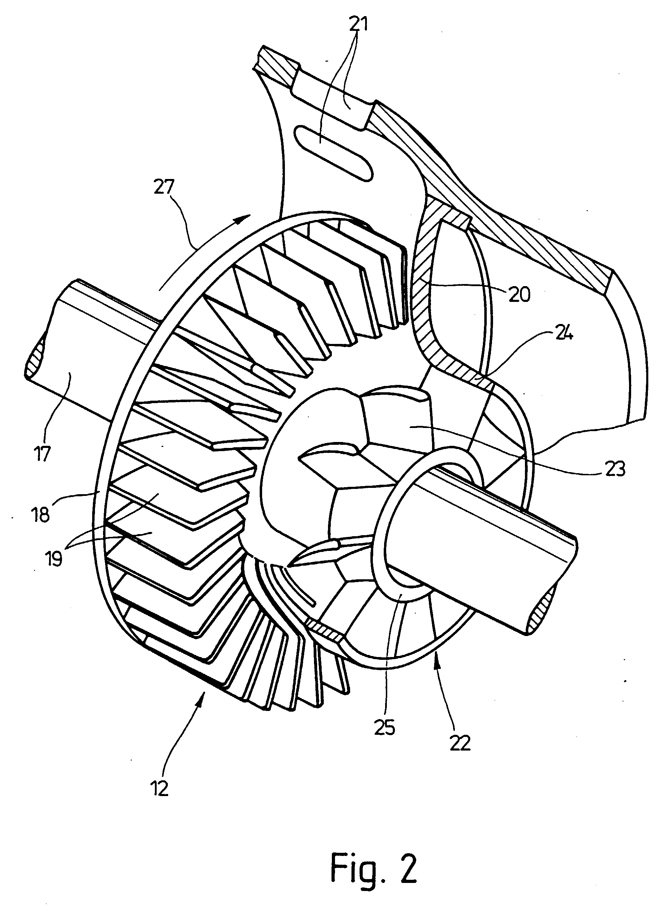

Zur weiteren Druckerhöhung und Erhöhung des den Radiallüfter 12 durchströmenden Luftstromes ist im motorwellennahen Ansaugbereich des Radiallüfters 12 diesem ein räumlich feststehendes Vordrallgitter 22 unmittelbar vorgeordnet, das so ausgebildet ist, daß die durch das Vordrallgitter 22 hindurchströmende Luft gegen den Lüfterdrehsinn des Radiallüfters 12 (Pfeil 27 in Fig. 2) abgelenkt wird. Hierzu weist das Vordrallgitter 22 eine Anzahl von Luftleitschaufeln 23 auf, die um gleiche Umfangswinkel gegeneinander versetzt angeordnet sind und sich im wesentlichen radial erstrecken. Die Schaufelebenen der Luftleitschaufeln 23 sind jeweils gegenüber der längs der Motorwellenachse sich erstreckenden Radialebene um einen spitzen Winkel angestellt. Die Luftleitschaufeln 23 sind zwischen einem Außenring 24 und einem dazu konzentrischen Innenring 25 gehalten, wobei der Innenring 25 die Motorwelle 17 mit geringem Radialabstand umschließt und der Außenring 24 an dem Abdeckring 20 des Radiallüfters 12, an diesem sich axial fortsetzend, befestigt ist. Die Anzahl der Luftleitschaufeln 23 des Vordrallgitters 22 liegt zwischen sechs bis zwölf Stück, wobei die Luftleitschaufeln 23 auf Lücke stehen, was bedeutet, daß ein in Achsrichtung auf das Vordrallgitter 22 blickender Betrachter zwischen zwei benachbarten Luftleitschaufeln 23 hindurchsehen kann. Diese "Lücken" sind zur Entfernung der beiden Werkzeughälften in rein axialer Richtung nach dem Spritzgießen von Vorteil. Der Durchmesser des Außenrings 24 entspricht etwa dem Durchmesser des Rotors 15 und das gesamte Vordrallgitter 22 ist bis dicht an die Wickelköpfe 141 der Statorwicklung 14 herangeführt. Das Vordrallgitter 22 wird bevorzugt aus Kunststoff und einstückig mit dem Abdeckring 20 gefertigt, so daß zur maschinengehäuseseitigen Befestigung des Radiallüfters 12 nur ein einziges Bauteil vorhanden ist.

Der vom Radiallüfter 12 erzeugte Kühlluftstrom wird über den Kollektor und die aktiven Motorteile hinweg angesaugt, durchströmt das Vordrallgitter 22, die im Radiallüfter 12 gebildeten Schaufelkanäle und tritt aus dem Maschinengehäuse 10 durch die Luftaustrittschlitze 21 aus. Die Kühlluftströmung ist in Fig. 1 durch Pfeile 26 angedeutet.

Fig. 2 verdeutlicht in einer perspektivischen Darstellung die konstruktive Ausbildung des Vordrallgitters 22. In dem teilweise aufgeschnitten dargestellten Vordrallgitter 22 ist deutlich die Anstellung der Luftleitschaufeln 23 gegenüber den längs der Motorwellenachse sich erstreckenden Radialebenen zu sehen. Die Luftleitschaufeln 23 sind damit zu der Motorwellenachse um einen kleinen spitzen Winkel gegen die Umlaufrichtung des Radiallüfters 12 geneigt oder angestellt. Die Drehrichtung des Radiallüfters 12 ist in Fig. 2 mit Pfeil 27 gekennzeichnet. Durch diese Anstellung der Luftleitschaufeln 23 werden die Lüfterschaufeln 19 des Radiallüfters 12 mit Gegendrall angeströmt. Dadurch wird bei unveränderter Schaufelgeometrie der Lüfterschaufeln 19 mehr Leistung auf die durchströmende Luft übertragen als bei drallfreier Anströmung. Berücksichtigt man, daß eine Mitdrall-Anströmung zu einer Minderung der Leistungsübertragung führt und daß ein normaler Radiallüfter, der also das Vordrallgitter 22 nicht besitzt, wegen der Rotordrehung zu gewissen Anteilen Mitdrall besitzt, so wird die Drucksteigerung und Volumenstromerhöhung durch das Vordrallgitter 22 wesentlich verstärkt, da dieses den ansonsten vorhandenen, leistungsmindernd wirkenden Mitdrall kompensiert.

## Patentansprüche

1. Handwerkzeugmaschine mit einem Maschinengehäuse (10), in dem ein Elektromotor (11) mit einem gehäusefesten Stator (13) und einem über eine gehäusegelagerte Motorwelle (17) drehenden Rotor (15) sowie ein Radiallüfter (12) mit Lüfterschaufeln (19) aufgenommen ist, der nahe der einen Stirnseite des Elektromotors (11) drehfest auf der Motorwelle (17) sitzt und Kühlluft über den Elektromotor (11) hinweg axial ansaugt und radial nach außen aus dem Maschinengehäuse (10) drückt, dadurch gekennzeichnet, daß dem Radiallüfter (12) in seinem Ansaugbereich ein räumlich feststehendes Vordrallgitter (22) in Luftströmungsrichtung unmittelbar vorgeordnet ist, das so ausgebildet ist, daß die Zuströmluft zum Radiallüfter (12) gegen den Lüfterdrehsinn abgelenkt wird.

2. Maschine nach Anspruch 1, dadurch gekennzeichnet, daß das Vordrallgitter (22) einen am Maschinengehäuse (10) koaxial zur Motorwelle (17) befestigten Außenring (24), einen die Motorwelle (17) unmittelbar konzentrisch umgebenden Innenring (25) und zwischen Innen- und Außenring (25,24) im wesentlichen sich radial erstreckende Luftleitschaufeln (23) aufweist, deren Schaufelebenen gegenüber den längs der Motorwellenachse sich erstreckenden Radialebenen jeweils angestellt sind.

3. Maschine nach Anspruch 1 oder 2, dadurch gekennzeichnet, daß das Vordrallgitter (22) als einstückiges Kunststoffbauteil gefertigt ist.

4. Maschine nach Anspruch 2 ode 3, dadurch gekennzeichnet, daß der Außenring (24) des Vordrallgitters (22) an einem gehäusefesten Abdeckring (20) befestigt ist, welcher die dem Ansaugbereich zugekehrte Stirnseite der Lüfterschaufeln (19) des Radiallüfters (12) in dem den Ansaugbereich umgebenden Radialbereich zur Bildung von Schaufelkanälen abdeckt.

5. Maschine nach Anspruch 4, dadurch gekennzeichnet, daß der Außenring (24) des Vordrallgitters (22) einstückig an dem Abdeckring (20) von diesem axial wegstrebend angeformt ist.

6. Maschine nach einem der Ansprüche 2 - 5, dadurch gekennzeichnet, daß der Durchmesser des Außenrings (24) des Vordrallgitters (22) in etwa dem Außendurchmesser des Rotors (15) entspricht.

7. Maschine nach einem der Ansprüche 2 - 6, dadurch gekennzeichnet, daß das Vordrallgitter (22) sechs bis zwölf Luftleitschaufeln (23) aufweist, die auf Lücke stehen.

8. Maschine nach einem der Ansprüche 1 - 7, dadurch gekennzeichnet, daß das Vordrallgitter (22) bis dicht an die Wickelköpfe (141) der Statorwicklung (14) herangeführt ist.

9. Maschine nach einem der Ansprüche 1 - 8, dadurch gekennzeichnet, daß im Maschinengehäuse (10) nahe dem luftaustrittsseitigen Ende des Radiallüfters (12) Luftaustrittsschlitze (21) angeordnet sind, deren Flächennormalen im wesentlichen radial ausgerichet sind.

10. Maschine nach einem der Ansprüche 1 - 9, dadurch gekennzeichnet, daß der Elektromotor (11) ein Kommutatormotor ist und der Radiallüfter (12) auf der vom Kommutator abgekehrten Seite des Elektromotors (11) angeordnet ist.

## Claims

1. Hand-held machine tool with a machine casing (10) in which there is accommodated an electric motor (11) with a fixed stator (13) and a rotor (15) that rotates over a motor shaft (17) supported by the casing, as well as a radial fan (12) with fan blades (19), said fan being seated in a rotationally fixed manner on the motor shaft (11) and close to one end of the electric motor (11), sucking cooling air axially over the electric motor (11) and expelling it radially outwards from the machine casing (10), characterized in that the radial fan (12) has a spatially fixed prerotation grating (22) arranged directly upstream in its suction region in the air flow direction, the grating being designed in such a way that the inflow air to the radial fan (12) is deflected counter to the direction of rotation of the fan.

2. Machine according to Claim 1, characterized in that the prerotation grating (22) has an outer ring (24) fastened on the machine casing (10) coaxial to the motor shaft (17), an inner ring (25) directly concentrically surrounding the motor shaft (17) and, between inner ring and outer ring (25, 24), air guiding vanes (23) that extend essentially radially and whose vane planes are in each case set opposite the radial planes extending along the motor shaft axis.

3. Machine according to Claim 1 or 2, characterized in that the prerotation grating (22) is produced as a one-piece plastic component.

4. Machine according to Claim 2 or 3, characterized in that the outer ring (24) of the prerotation grating (22) is fastened to a covering ring (20) which is fixed to the casing and which, for the purpose of forming vane ducts, covers that end, facing the suction region, of the fan blades (19) of the radial fan (12) in the radial region surrounding the suction region.

5. Machine according to Claim 4, characterized in that the outer ring (24) of the prerotation grating (22) is integrally moulded in one piece on the covering ring (20), pointing axially away from the latter.

6. Machine according to one of Claims 2 - 5, characterized in that the diameter of the outer ring (24) of the prerotation grating (22) approximately corresponds to the outer diameter of the rotor (15).

7. Machine according to one of Claims 2 - 6, characterized in that the prerotation grating (22) has six to twelve air guiding vanes (23) which are arranged with gaps between them.

8. Machine according to one of Claims 1 - 7, characterized in that the prerotation grating (22) is led close to the winding heads (141) of the stator winding (14).

9. Machine according to one of Claims 1 - 8, characterized in that there are arranged in the machine casing (10), close to the air exit end of the radial fan (12), air exit slots (21) whose surface normals are directed essentially radially.

10. Machine according to one of Claims 1 - 9, characterized in that the electric motor (11) is a commutator motor and the radial fan (12) is arranged on that side of the electric motor (11) facing away from the commutator.

## Revendications

1. Outil à main motorisé comportant un boîtier (10) contenant d'une part un moteur électrique (11) dont le stator (13) est solidaire du boîtier tandis que le rotor (15) est monté sur un arbre (17) tournant dans des paliers solidaires du boîtier, d'autre part un ventilateur radial (12) équipé d'ailettes (19), monté près d'une face frontale de moteur (11) et solidaire en rotation de l'arbre (17), l'air frais étant aspiré axialement en balayant le moteur et évacué radialement en pression hors du boîtier (10), caractérisé en ce que directement en amont du ventilateur (12) selon le sens d'écoulement de l'air, une grille de torsion préalable (22) est montée fixe dans la zone d'aspiration, cette grille étant conçue de manière que le flux d'air qui en sort en direction du ventilateur soit dévié à l'opposé du sens de rotation du ventilateur.

2. Outil à main motorisé selon la revendication 1, caractérisé en ce que la grille (22) comporte une bague externe (24) et une bague interne (25) entourant de près l'arbre (17) de moteur, ces deux bagues étant concentriques à l'arbre et enfermant entre elles des ailettes déflectrices (23) essentiellement radiales et dont les plans sont réglés chaque fois par rapport aux plans radiaux passant par l'arbre du moteur .

3. Outil à main motorisé selon la revendication 1 ou 2, caractérisé en ce que la grille de torsion préalable (22) est faite d'une seule pièce en matière plastique.

4. Outil à main motorisé selon les revendications 2 ou 3, caractérisé en ce que la bague externe (24) de la grille (22) est fixée à une bague de couverture (20) solidaire du boîtier et qui recouvre les faces frontales tournées vers la zone d'aspiration des ailettes (19) du ventilateur radial (12), dans la partie entourant cette zone d'aspiration de manière à créer des canaux entre les ailettes.

5. Outil à main motorisé selon la revendication 4, caractérisé en ce que la bague externe (24) de la grille (22) est moulée en une pièce, avec la bague de couverture (20) qu'elle prolonge axialement.

6. Outil à main motorisé selon une des revendications 2 à 5, caractérisé en ce que le diamètre de la bague externe (24) de la grille (22) correspond sensiblement au diamètre extérieur du rotor (15).

7. Outil à main motorisé selon une des revendications 2 à 6, caractérisé en ce que la grille (22) comporte de six à douze ailettes directrices (23) formant des lucarnes.

8. Outil à main motorisé selon une des revendications 1 à 7, caractérisé en ce que la grille (22) s'avance tout près des têtes d'enroulement (141) du bobinage (14) du stator.

9. Outil à main motorisé selon une des revendications 1 à 8, caractérisé en ce que le boîtier (10) de la machine, près de l'extrémité du ventilateur radial (12) située vers la sortie de l'air, est percé de fentes (21) d'évacuation d'air dont les surfaces ont leurs normales orientées essentiellement radialement.

10. Outil à main motorisé selon une des revendications 1 à 9, caractérisé en ce que le moteur électrique (11) est un moteur à collecteur et le ventilateur radial (12) est monté sur le côté du moteur (11) opposé au collecteur.
